## Europäisches Patentamt

## European Patent Office

## Office européen des brevets

(19)

(11) Veröffentlichungsnummer: **0 210 403**
**B1**

(12) # EUROPÄISCHE PATENTSCHRIFT

(45) Veröffentlichungstag der Patentschrift:
02.11.88

(51) Int. Cl.⁴: **B 60 H 1/00**

(21) Anmeldenummer: 86108242.8

(22) Anmeldetag: 16.06.86

(54) Belüftungsanlage in Kraftfahrzeugen, insbesondere Omnibussen.

(30) Priorität: 26.07.85 DE 3526880

(43) Veröffentlichungstag der Anmeldung:
04.02.87 Patentblatt 87/6

(45) Bekanntmachung des Hinweises auf die Patenterteilung:
02.11.88 Patentblatt 88/44

(84) Benannte Vertragsstaaten:
AT BE DE FR IT NL SE

(56) Entgegenhaltungen:
DE-A-1 755 898
DE-B-1 155 578

(73) Patentinhaber: M A N Nutzfahrzeuge GmbH,
Dachauer Strasse 667 Postfach 50 06 20, D-8000
München 50 (DE)

(72) Erfinder: Geyer, Ludwig, Wettersteinstrasse 10,
D-8039 Puchheim (DE)
Erfinder: Krimmling, Harald, Am Fohlengarten 7B,
D-8042 Oberschleissheim (DE)
Erfinder: Eder, Hans, Haarbach 50, D-8309
Au/Hallertau (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

EP 0 210 403 B1

## Beschreibung

Die Erfindung bezieht sich auf eine Belüftungsanlage in Kraftfahrzeugen, insbesondere Omnibussen, mit einer für die Frischluftzufuhr auf dem rückwärtigen Teil des Omnibusdaches befindlichen Dachhutze, mit im Wageninneren in den Eckbereichen von Seitenwand und Dach angeordneten, über die Wagenlänge Luftausblasöffnungen aufweisenden Luftkanälen und mit den Luftkanälen zugeordneten Gebläsen und Wärmetauschern.

Belüftungsanlagen der obengenannten Art sind in einer Vielzahl von Ausführungsformen bekannt, die auch unter optimalen Umweltbedingungen zufriedenstellend funktionieren. Bei winterlichen Betriebsbedingungen jedoch kann die Frischluftzufuhr beispielsweise durch eine massive Schneeauflage auf auf dem Wagendach abgeschnitten sein. Dann erfolgt bei den derzeitig bekannten Systemen keine Luftbewegung im Fahrzeuginneren, was zu massiver Deeinträchtigung des Wohlbefindens der Fahrgäste führt. Weiterhin ergibt sich, was die Frischluftzufuhr betrifft, eine erhebliche Schlechterstellung der Fahrgäste, die die hintere Sitzreihe besetzt halten, sind sie doch der Wärmeabstrahlung des sich im unteren Teil des Heckraumes angeordneten Verbrennungsmotors ausgesetzt, dessen negativer klimatischer Einfluß sich insbesondere bei Stadtfahrten mit geringer Geschwindigkeit und öfteren Halten sowie im Stau auf die Fahrgäste auswirkt.

Der Erfindung liegt die Aufgabe zugrunde, eine Belüfungsanlage zu finden, die die vorgenannten Nachteile vermeidet, also gleichartige klimatische Verhältnisse im gesamten Fahrgastraum herstellt wie auch eine Luftbewegung bei blockierter Frischluftzuführung erlaubt.

Die Aufgabe wird erfindungsgemäß durch die Merkmale des Anspruches 1 gelöst. Es ist hier besonders wichtig, daß mit geringem baulichen Aufwand, also durch Anordnung von zwei innerhalb der Hutze betätigbaren Klappen verschiedene Belüftungssituationen erzielt werden können, und die Luftführungsaggregate konventioneller Bauarten im wesentlichen beibehalten werden können.

Nach einem Merkmal des Anspruches 2 ist in der ersten Gebrauchsstellung zur normalen Beaufschlagung der Luftkanäle die Frischluftklappe geöffnet und die Umluftklappe geschlossen. Diese erste Gebrauchsstellung ist bei normalem Reiseverkehr gegeben, bei dem infolge größerer Reisegeschwindigkeit und damit zusammenhängend, höherer Lufteintrittsgeschwindigkeiten sowie höherem Frischluftdurchsatz auch die hintere, heckseitige Sitzreihie gut belüftet, insbesondere auch unter Berücksichtigung des durch den Fahrwind gut gekühlten Motor-Getrieberaumes im Heck des Fahrzeuges.

Nach dem alternativen Merkmal des Anspruches 3 sind in der zweiten Gebrauchsstellung zur zusätzlichen intensiven Belüftung der Sitzreihe im Heckbereich die Frischluftklappe und die Umlaufklappe geöffnet. Diese zweite Gebrauchsstellung liegt insbesondere dann vor, wenn der Omnibus im Stadtverkehr langsam fahren oder gar anhalten muß oder im Langzeitreiseverkehr in einen Stau gerät. In solchen Situationen ist es angebracht, die zusätzliche Umluftklappe zu öffnen, um der Hecksitzreihe ein Mehrangebot an Frischluft zukommen zu lassen.

Nach einem weiteren alternativen Merkmal des Anspruches 4 ist in der dritten Gebrauchsstellung zur Belüftung des Wageninneren mit Umluft bei abgeschnittener Frischluftzufuhr die Frischluftklappe geschlossen und die Umluftklappe geöffnet. Die dritte Gebrauchsstellung ist dann gegeben, wenn winterliche Straßenverhältnisse, z. B. durch eine Schneedecke auf dem Dach, eine Frischluftzufuhr über die Hutze nicht gestatten. Es erfolgt dann durch Schließen der Frischluftklappe und öffnen der Umluftklappe eine Luftumwälzung der sich im Inneren des Omnibusses befindlichen Umluft, wodurch alle Nachtele einer stehenden Luft vermieden werden. Diese Umluftumwälzung ist eine Notmaßnahme, die nur von vernältnismäßig kurzer Dauer ist, nämlich nur so lange, bis der die Öffnung der Hutze blockierende Schnee geschmolzen oder abgetaut ist.

In vorteilhafter Ausgestaltung der Erfindung weisen die seitlichen Luftkanäle mit ihren Luftaustrittsöffnungen weitere, den einzelnen Sitzreihen zugeordnete, individuell bedienbare Luftduschen auf. So ist es dem einzelnen Fahrgast möglich, Belüftungsverhältnisse herzustellen, die ganz auf sein individuelles Bedürfnis, z. B. alters- oder gesundheitsbedingt, ausgerichtet sind.

Nach einer anderen besonders nützlichen Ausbildung der Erfindung ist deckenseitig in der Längsebene des Omnibusses ein mit entsprechenden seitlichen Blechen verbundenes perforiertes Band für eine zusätzliche Beaufschlagung des Mittelganges mit Frischluft vorgesehen. Dieser zusätzliche Luftaustritt ermöglicht eine Luftzufuhr in die Zone des Mittelganges und der Außensitze, so daß auch hier die Belüftungsverhältnisse optimiert sind.

Einem weiteren Merkmal der Erfindung zufolge sind über die Länge des Omnibusdaches ein oder mehrere wahlweise öffnungs- oder verschließbare Luftzuführungssysteme als Notaggregate angeordnet. Diese Luftführungssysteme sind nur für den Notfall gedacht, d. h. , wenn die vorbeschriebene Anlage in ihren drei Gebrauchsstellungen nicht mehr funktioniert.

Weitere Merkmale und Vorteile der Erfindung sind den anliegenden Ansprüchen, der Beschreibung und den Zeichnungen zu entnehmen.

Die Erfindung wird anhand eines Ausführungsbeispieles beschrieben.

Es zeigen:

Fig. 1    einen Ausschnitt eines Omnibusses mit geöffneter Frischluftklappe und geschlossener Umlaufklappe,

Fig. 2    einen Ausschnitt eines Omnibusses mit geöffneter Frischluftklappe und geöffneter Umluftklappe,

Fig. 3    einen Ausschnitt eines Omnibusses mit geschlossener Frischluftluftklappe und geöffneter Umluftklappe,

Fig. 4    eine Draufsicht auf das Dach des Omnibusses.

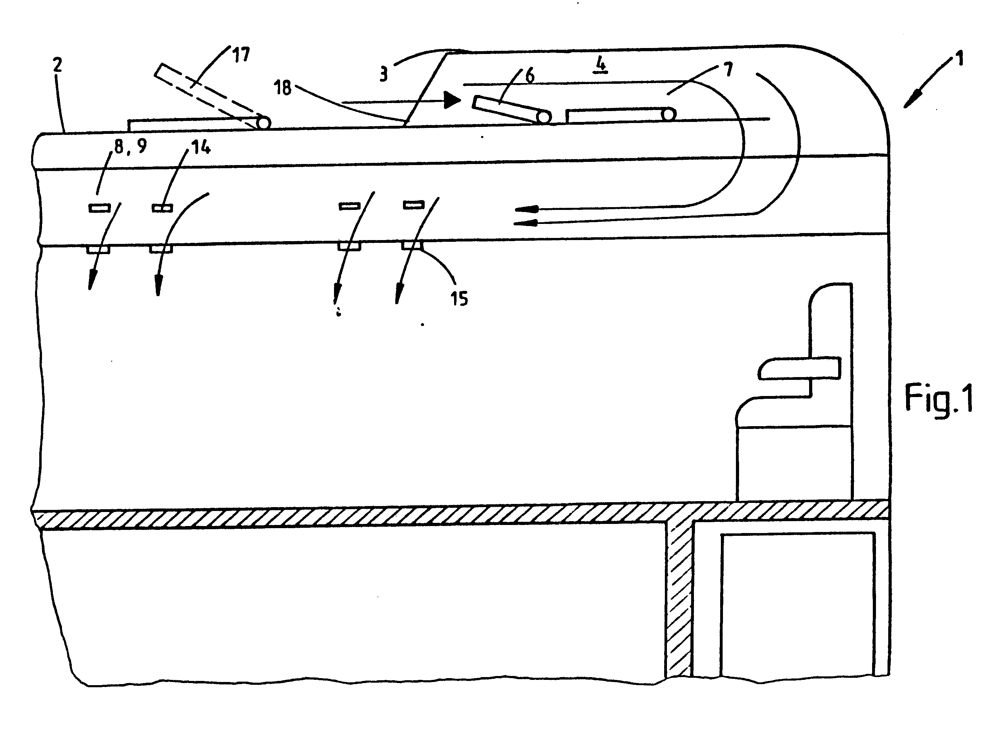

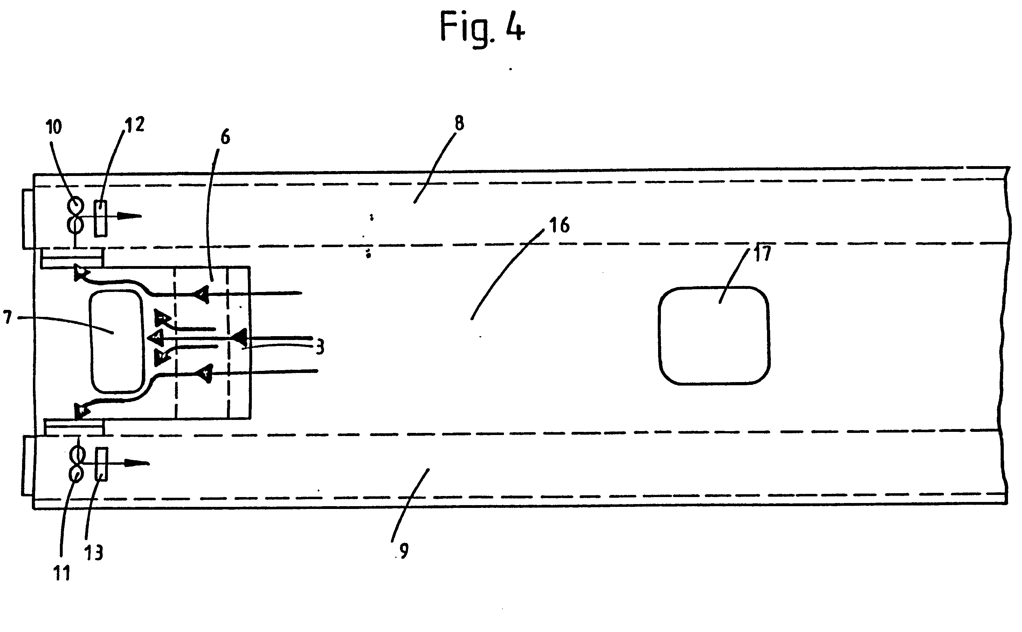

Die Figuren 1, 2 und 3 zeigen ausschnittweise die Seitenansicht des erfindungsgemäßen Omnibusses 1. Auf dem Dach 2 ist im hinteren Bereich die Hutze 3 mit der Öffnung 18, in der die Fahrtluft einströmt, angeordnet. Der Hutzenbereich weist zwei Öffnungen 4 und 5 auf, wobei die Öffnung 4 durch den Querschnitt der Hutze gebildet wird. Den Öffnungen 4 und zugeordnet sind die Klappen 6 und 7, von denen erstere die Frischluftklappe und letztere die Umluftklappe darstellt. Die Frischluftklappe 6 öffnet oder verschließt die Öffnung 4, die in einem Stauraum mündet, der wiederum mit den beidseitig angeordneten, sich über die Länge des Fahrzeuges erstreckenden Luftkanäle 8, 9 verbunden ist, wobei die Luft um 180° umgelenkt wird. Im Bereich des Stauraumes oder dahinter sind Gebläse 10, 11 und Wärmetauscher 12, 13 (Fig. 4) angeordnet, die von der Frischluft passiert werden, wobei die Gebläse nur bei niedrigen Geschwindigkeiten und die Wärmetauscher nur bei niedrigen Temperaturen zugeschaltet werden. Die Frischluft wird durch die Luftaustrittsöffnungen 14 und/oder die Luftduschen 15, individuell bedienbar in den Fahrgastraum geleitet. Es können selbstverständlich auch lediglich Luftduschen 15 vorgesehen sein. Um keine Unterversorgung mit Luft im Mittelgang zu erhalten, wird aus dem Stauraum ein Frischluftanteil in einen an der Decke befindlichen Kanal, der aus entsprechenden Seitenblechen und einem perforierten, den Kanal nach unten begrenzenden Band gebildet ist, abgezweigt. Die Luft tritt durch die Perforierung aus und beaufschlagt sowohl den Mittelgang wie auch die äußeren Sitzreihen. Für den Fall, daß die vorbeschriebene Belüftungsanlage teilweise oder ganz ausfällt sind weitere, auf der Längserstreckung des Daches 2 befindliche Luftzuführungssysteme 17 als Notaggregate vorgesehen.

Figur 1 zeigt die erste Gebrauchsstellung des erfinderischen Systems, wobei die Frischluftklappe 6 die Öffnung 4 freigibt und die Umluftklappe 7 die Öffnung 5 schließt. Solchermaßen ist der Betrieb der Anlage im normalen Überlandreiseverkehr, bei dem infolge hoher Reisegeschwindigkeit eine gute Belüftung des gesamten Fahrzeuginneren erzielt wird. Die Pfeile Zeigen den Weg der einströmenden Luft bis zum Verbraucher an. Dies gilt für alle nachfolgend beschriebenen Figuren.

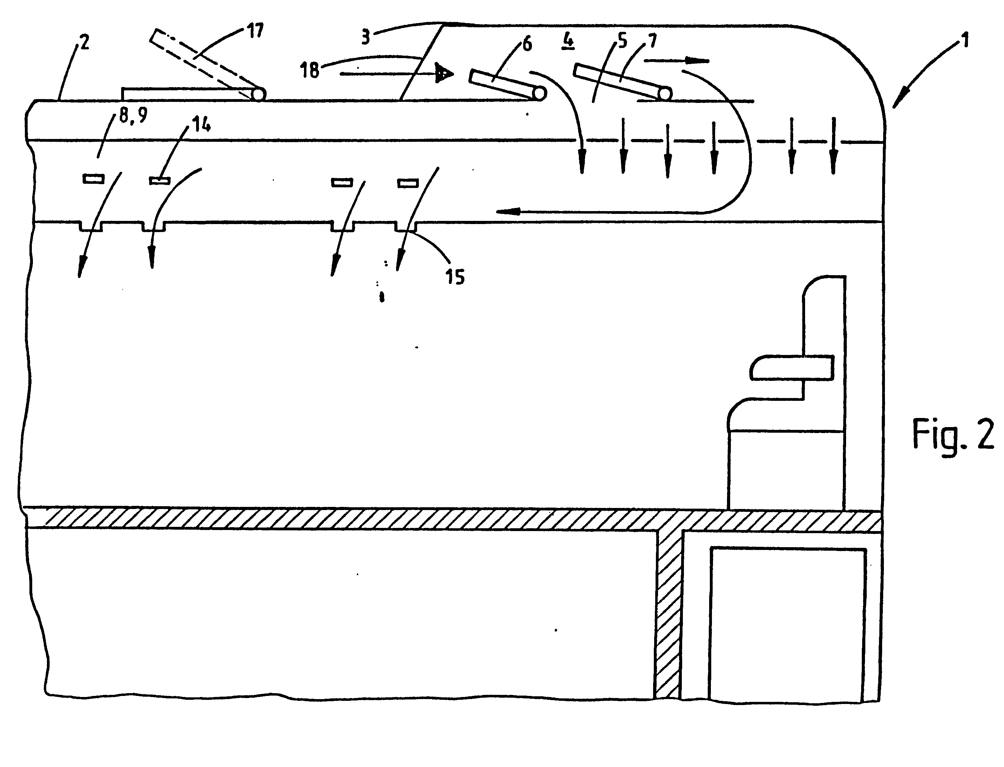

Figur 2 zeigt die zweite Gebrauchsstellung des erfinderischen Systems, wobei die Frischluftklappe 6 die Öffnung 4 und die Umluftklappe 7 die Öffnung 5 freigeben. Solchermaßen ist der Betrieb bei Stadtverkehr, bei dem einerseits niedrige Geschwindigkeiten bzw. Halte mit geringem Luftdurchsatz und geringer Strömungsgeschwindigkeiten gegeben sind und andererseits die von dem im Heckraum stationierten Verbrennungsmotor abgestrahlte Wärme deutlich spürbar ist. Um diese höhere Temperatur zu kompensieren, wird die Hecksitzreihe nach Fig. 2 mit einem Zusätzlichen Luftstrom beaufschlagt.

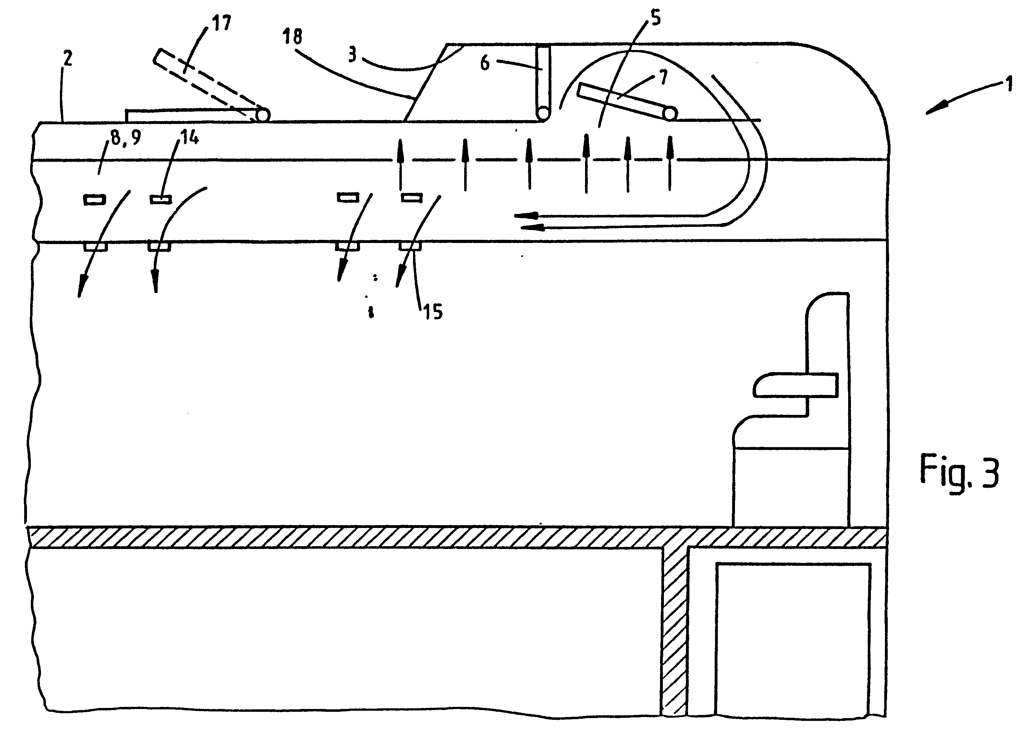

Figur 3 zeigt eine dritte Gebrauchsstellung des erfinderischen Systems, wobei die Frischluftklappe 6 die Öffnung 4 verschließt und die Umluftklappe 7 die Öffnung 5 freigibt. Diese Situation ist insbesondere bei winterlichen Verhältnissen, d. h., wenn Schnee die Frischluftzufuhr versperrt, gegeben, Es wird dann über die Gebläse 10, 11 Luft aus dem Wageninneren angesaugt und durch die Luftkanäle den Verbrauchern zugeführt. Diese Stellung der Klappen ist zeitlich begrenzt, d. h., sie dauert nur solange, bis der Schnee geschmolzen ist und der Eingang der Hutze freiliegt.

## Patentansprüche

1. Belüftungsanlage in Kraftfahrzeugen, insbesondere Omnibussen, mit einer für die Frischluftzufuhr (18) auf dem rückwärtigen Teil des Omnibusdaches (2) befindlichen Dachhutze (3), mit im Wageninneren in den Eckbereichen von Seitenwand und Dach angeordneten, über die Wagenlänge Luftausblasöffnungen (14, 15) aufweisenden Luftkanälen (8, 9) und mit den Luftkanälen zugeordneten Gebläsen (10, 11) und Wärmetauschern (12, 13), dadurch gekennzeichnet, daß im hinteren Bereich des Wagendaches (2) unter der Hutze (3) mindestens zwei Öffnungen (4, 5) vorgesehen sind, die durch mindestens zwei Klappen (6, 7) in Unterschiedlicher Kombination zueinander und zu mindestens drei Gebrauchsstellungen variierbar, öffnungs- und verschließbar sind, wobei die erste Klappe als Frischluftklappe (6) dem Querschnitt der Hutze (Öffnung 4) und die zweite Klappe (7) als Umluftklappe der Öffnung (5) in) Wagendach (2) zugeordnet sind.

2. Belüftungsanlage nach Anspruch 1, dadurch gekennzeichnet, daß in der ersten Gebrauchsstellung zur normalen Beaufschlagung der Luftkanäle (8, 9) die Frischluftklappe (6) geöffnet und die Umluftklappe (7) geschlossen ist.

3. Belüftungsanlage nach Anspruch 1, dadurch gekennzeichnet, daß in der zweiten Gebrauchsstellung zur zusätzlich intensiven Belüftung der Sitzreihe im Heckbereich die Frischluftklappe (6) und die Umluftklappe (7) geöffnet sind.

4. Belüftungsanlage nach Anspruch 1, dadurch gekennzeichnet, daß in der dritten Gebrauchsstellung zur Belüftung des Wageninneren mit Umluft bei abgeschnittener Frischluftzufuhr (18) die Frischluftklappe (6) geschlossen und die Umluftklappe (7) geöffnet ist.

5. Belüftungsanlage nach einem oder mehreren der Ansprüche 1 bis 4, dadurch gekennzeichnet, daß die mittig in die Hutze einfließende Frischluft in einem Stauraum um 180° in die seitlichen Luftkanäle (8, 9) umgelenkt wird.

6. Belüftungsanlage nach einem oder mehreren der Ansprüche 1 bis 5, dadurch gekennzeichnet, daß die vor den Luftkanälen (8, 9) angeordneten Gebläse (10, 11) wahlweise zu- und abschaltbar sind.

7. Belüftungsanlage nach einem oder mehreren der Ansprüche 1 bis 6, dadurch gekennzeichnet, daß die seitlichen Luftkanäle (8, 9) mit ihren Luftaustrittsöffnungen (14) weitere, den einzelnen Sitzreihen zugeordnete, individuell bedienbare Luftduschen (15) aufweisen.

8. Belüftungsanlage nach einem oder mehreren der Ansprüche 1 bis 7, dadurch gekennzeichnet, daß deckenseitig in der Längsebene des Omnibusses (1) ein mit entsprechenden seitlichen Blechen verbundenes perforiertes Band (16) für eine zusätzliche Beaufschlagung des Mittelganges mit Frischluft vorgesehen ist.

9. Belüftungsanlage nach einem oder mehreren der Ansprüche 1 bis 8, dadurch gekennzeichnet, daß über die Länge des Omnibusdaches ein oder mehrere wahlweise öffnungs- oder verschließbare Luftzuführungssysteme (17) als Notaggregate angeordnet sind.

10. Belüftungsanlage nach einem oder mehreren der Ansprüche 1 bis 9, dadurch gekennzeichnet, daß die Art der Belüftung vom Fahrerplatz aus einstellbar ist.

**Claims**

1. An air-conditioning system in motor vehicles, in particular buses, having a roof scoop (3) provided on the rear part of the roof (2) of the bus for the fresh air supply (18), air ducts (8, 9) arranged in the interior of the vehicle in the corner areas of the side wall and the roof and comprising air discharge openings (14, 15) along the length of the vehicle, and blowers (10, 11) and heat exchangers (12, 13) associated with the air ducts, characterized in that at least two openings (4, 5), which can be varied, opened and closed by at least two flaps (6, 7) in different combinations with respect to one another and with respect to at least three positions of use, are provided in the rear area of the vehicle roof (2) below the scoop (3), the first flap being a fresh air flap (6) associated with the cross-section of the scoop (opening 4) and the second flap (7) being a return air flap associated with the opening (5) in the vehicle roof (2).

2. An air-conditioning system according to Claim 1, characterized in that in the first position of use for acting upon the air ducts (8, 9) in a normal manner the fresh air flap (6) is opened and the return air flap (7) is closed.

3. An air-conditioning system according to Claim 1, characterized in that in the second position of use for additional intensive ventilation of the row of seats in the rear area the fresh air flap (6) and the return air flap (7) are opened.

4. An air-conditioning system according to Claim 1, characterized in that in the third position of use for ventilating the interior of the vehicle with return air when the fresh air supply (18) is cut off, the fresh air flap (6) is closed and the return air flap (7) is opened.

5. An air-conditioning system according to one or more of Claims 1 to 4, characterized in that the fresh air flowing centrally into the scoop is def lected in a baffle chamber through 180° into the lateral air ducts (8, 9).

6. An air-conditioning system according to one or more of Claims 1 to 5, characterized in that the blowers (10, 11) arranged in front of the air ducts (8, 9) can be switched on and off optionally.

7. An air-conditioning system according to one or more of Claims 1 to 6, characterized in that the lateral air ducts (8, 9) with their air escape openings (14) comprise additional air sprays (15) which are associated with the individual rows of seats and which can be operated individually.

8. An air-conditioning system according to one or more of Claims 1 to 7, characterized in that a perforated band (16) joined to corresponding lateral sheets is provided on the ceiling in the longitudinal plane of the bus (1) in order to act additionally upon the gangway - with fresh air.

9. An air-conditioning system according to one or more of Claims 1 to 8, characterized in that one or more air supply systems (17) which can be opened and closed optionally are arranged as emergency units along the length of the roof of the bus.

10. An air-conditioning system according to one or more of Claims 1 to 9, characterized in that the manner of ventilation can be set from the driver's seat.

**Revendications**

1. Installation de ventilation de véhicules automobiles, notamment d'autobus, comportant une manche d'admission (3) disposée sur la partie arrière du toit (2) de l'autobus pour l'amenée d'air frais (18), des conduits d'air (8, 9) disposés à l'intérieur du véhicule dans les zones d'angles entre les parois latérales et le toit en présentant des ouvertures de soufflage d'air (14, 15) sur la longueur du véhicule, ainsi que des ventilateurs (10, 11) et des échangeurs de chaleur (12, 13) associés aux conduits d'air, caractérisée en ce qu'au moins deux ouvertures (4, 5) sont prévues dans la partie arrière du toit (2) du véhicule, sous la manche (3), ces ouvertures pouvant être ouvertes et fermées de façon variable par au moins deux volets (6, 7) suivant des combinaisons différentes entre elles et avec au moins trois positions d'utilisation, le premier volet étant associé en tant que volet d'air frais (6) à la section transversale de la manche (ouverture 4) et le second volet (7) étant associé en tant que volet d'air en circulation à l'ouverture (5) du toit (2) du véhicule.

2. Installation de ventilation selon la revendication 1, caractérisée en ce que dans la première position d'utilisation, pour l'alimentation normale des conduits d'air (8, 9), le volet d'air frais (6) est ouvert et le volet d'air en circulation (7) est fermé.

3. Installation de ventilation selon la revendication 1, caractérisée en ce que dans la deuxième position d'utilisation, pour la ventilation supplémentaire intense de la rangée de sièges de la zone arrière, le volet d'air frais (6) et le volet d'air en circulation (7) sont ouverts.

4. Installation de ventilation selon la revendication 1, caractérisée en ce que dans la troisième position d'utilisation, pour la ventilation de l'intérieur du véhicule avec de l'air en circulation, l'amenée d'air frais (18) étant coupée, le volet d'air frais (6) est fermé et le volet d'air en circulation (7) est ouvert.

5. Installation de ventilation selon l'une ou plusieurs des revendications 1 à 4, caractérisée en ce que l'air frais qui s'écoule dans la manche en position médiane est, dans une chambre de retenue déviée de 180° dans les conduits d'air latéraux (8, 9).

6. Installation de ventilation selon l'une ou plusieurs des revendications 1 à 5, caractérisée en ce que les ventilateurs (10, 11) disposés devant les conduits d'air (8, 9) peuvent être branchés et coupés au choix.

7. Installation de ventilation selon l'une ou plusieurs des revendications 1 à 6, caractérisée en ce que les conduits d'air latéraux (8, 9) munis des ouvertures de sortie d'air (14) comportent en outre des buses de ventilation (15) à commande individuelle associées aux rangées de sièges individuelles.

8. Installation de ventilation selon l'une ou plusieurs des revendications 1 à 7, caractérisée en ce qu'une bande perforée (16) assemblée avec des tôles latérales correspondantes est prévue en plafond suivant la longueur de l'autobus (1) pour la ventilation supplémentaire du couloir central avec de l'air frais.

9. Installation de ventilation selon l'une ou plusieurs des revendications 1 à 8, caractérisée en ce qu'un ou plusieurs systèmes d'amenée d'air (17) pouvant être ouverts ou fermés au choix sont disposés sur la longueur du toit de l'autobus en tant qu'ensembles de secours.

10. Installation de ventilation selon l'une ou plusieurs des revendications 1 à 9, caractérisée en ce que le mode de ventilation du poste de conduite est réglable.

Fig.1

0 210 403

Fig. 2

Fig. 3

0 210 403

# Fig. 4

0 210 403